# EUROPÄISCHE PATENTSCHRIFT

(11) **EP 3 201 375 B1**
(45) Veröffentlichungstag und Bekanntmachung des Hinweises auf die Patenterteilung: **07.11.2018**
(21) Anmeldenummer: 15763299.3
(22) Anmeldetag: 10.09.2015
(51) Int. Cl.: D01F 6/38

(54) **VERFAHREN ZUR THERMISCHEN STABILISIERUNG VON FASERN SOWIE DERART STABILISIERTE FASERN**
METHOD FOR THE THERMAL STABILISATION OF FIBRES AND SAID TYPE OF STABILISED FIBRES
PROCÉDÉ DE STABILISATION THERMIQUE DE FIBRES ET FIBRES STABILISÉES SELON LEDIT PROCÉDÉ

(30) Priorität: 29.09.2014 DE 102014219708
(43) Veröffentlichungstag der Anmeldung: 09.08.2017
(73) Patentinhaber: Fraunhofer-Gesellschaft zur Förderung der angewandten Forschung e.V., 80686 München (DE)
(72) Erfinder: HAHN, Mathias, Michendorf 14552 (DE); LIESKE, Antje, Potsdam 14480 (DE); KNOOP, Mats, Potsdam 14469 (DE)
(74) Vertreter: Pfenning, Meinig & Partner mbB
(86) Internationale Anmeldenummer: PCT/EP2015/070771
(87) Internationale Veröffentlichungsnummer: WO 2016/050479

(56) Entgegenhaltungen:
- DE-A1- 2 603 029
- GB-A- 1 540 905
- US-A- 5 168 004
- US-A1- 2013 133 819

## Beschreibung

Die Erfindung betrifft ein Verfahren zur Herstellung von thermisch stabilisierten schmelzgesponnenen Fasern, bei dem durch Schmelzspinnen hergestellte Polyacrylnitril (PAN)-Fasern bzw. PAN-Faserprecursoren in einer wässrigen alkalischen, zusätzlich ein Lösungsmittel für PAN enthaltenden Lösung behandelt werden. Ebenso betrifft die Erfindung Fasern, die gemäß diesem Verfahren herstellbar sind.

Die im Bereich der technischen Fasern immer höhere Bedeutung gewinnenden Carbonfasern werden gemäß Stand der Technik durch thermische Konvertierung von separat hergestellten Precursor-Fasern hergestellt. Materialien für die Precursor-Fasern sind vor allem PAN-(Co)Polymere (Acryl-Precursor) sowie Pech. Acryl-Precursorfasern werden kommerziell bisher ausschließlich über Nass- bzw. Trockenspinnverfahren hergestellt. Dazu wird eine Lösung der Polymere mit Konzentrationen ≤ 20% entweder in ein Koagulationsbad oder eine heiße Dampfatmosphäre gesponnen, wobei das Lösungsmittel aus der Faser diffundiert. Auf diese Weise werden qualitativ hochwertige Precursoren erzeugt, die Kosten der Verfahren sind jedoch vergleichsweise hoch. Dies resultiert einerseits aus den benötigten Lösemitteln und deren Handling, andererseits aus dem relativ geringen Durchsatz bei Lösungsspinnverfahren.

Aufgrund der starken inter- und intramolekularen Wechselwirkungen der Nitrilgruppen liegt der Schmelzpunkt von PAN mit 320°C oberhalb der Zersetzungstemperatur des Polymers. Dies bedeutet, dass ein Schmelzspinnen von reinem PAN nicht möglich ist, das Polymer verhält sich nicht wie ein Thermoplast sondern wie ein Duroplast. Gleichzeitig würde jedoch die Möglichkeit zur Herstellung von Precursorfasern mittels Schmelzspinnen eine deutliche Kostenersparnis in der Precursorherstellung bedeuten, da der Durchsatz beim Schmelzspinnen wesentlich höher ist und zudem keine Lösungsmittel anfallen, die Kosten für Beschaffung und Recycling/Entsorgung verursachen.

Seit mehreren Jahrzehnten gibt es daher Bestrebungen, PAN der Verarbeitung mittels Schmelzspinnen zugänglich zu machen. Prinzipiell zu unterscheiden sind dabei Ansätze über eine äußere Weichmachung (Mischung des Polymers mit Zusätzen) und über eine innere Weichmachung (Copolymerisation). In beiden Fällen wird dabei die Wechselwirkung der Nitrilgruppen gestört, so dass das Schmelzen unterhalb der Zersetzungstemperatur des Polymers erfolgt.

Wesentliche Voraussetzung für die Weiterverarbeitung zu Carbonfasern ist die Möglichkeit, die Fasern anschließend oxidativ zu stabilisieren. Dieser Prozess wird bei Temperaturen oberhalb 200°C durchgeführt und resultiert in der Bildung cyclischer Strukturen, die erst die anschließende Carbonisierung ermöglichen. Dies kann selbstverständlich nur dann gelingen, wenn die Fasern bei den Stabilisierungstemperaturen nicht schmelzen - was ein zusätzlich zu lösendes Problem darstellt, da die Stabilisierungstemperaturen im Allgemeinen höher als die Verarbeitungstemperaturen beim Schmelzspinnen liegen.

Wie bereits erwähnt ist die Prästabilisierung von schmelzgesponnenen PAN-Fasern vor der eigentlichen oxidativen Stabilisierung/Carbonisierung eines der entscheidenden Probleme, die es im Zusammenhang mit schmelzspinnbaren PAN-Precursoren zu lösen gilt. Die Stabilisierung wird üblicherweise im Temperaturbereich zwischen 200°C und 300°C unter Luftatmosphäre durchgeführt. Es ist augenfällig, dass die oben beschriebenen schmelzgesponnenen PAN-Precursor Fasern unter diesen Bedingungen erweichen/schmelzen und damit eine Stabilisierung unter Erhalt der Fasereigenschaften unmöglich machen würden. Dies bedeutet, dass die Faser nach dem Spinnen zunächst in einen unschmelzbaren Zustand versetzt werden muss.

Der einzige in der Literatur dazu bisher als gangbar aufgezeigte Weg ist die Vernetzung der fertigen Faser durch UV- oder Elektronen-Bestrahlung (Mukundan et al.; Polymer 2006 47: 4163-4171), wobei ersteres den Einbau eines zusätzlichen photosensitiven Comonomers, zweiteres die Sensibilisierung des Polymers für die Elektronenstrahlen beispielsweise durch einen eingebrachten Vernetzter (Triallylisocyanurat oder vergleichbar) erfordert. Die Nachteile der Methoden liegen auf der Hand; abgesehen von der praktisch nicht gegebenen kommerziellen Verfügbarkeit UV-aktiver Monomere werden weitere Störstellen in die Faser eingebracht, die die Eigenschaften der resultierenden Carbonfaser negativ beeinflussen.

Ausgehend hiervon war es Aufgabe der vorliegenden Erfindung die thermische Stabilität von schmelzgesponnenen Acryl-Fasern so zu optimieren, dass die Fasern nach dem Spinnen in einem für die weitere Verarbeitung unschmelzbaren Zustand vorliegen.

Diese Aufgabe wird durch das Verfahren mit den Merkmalen des Anspruchs 1 sowie durch die schmelzgesponnenen Fasern mit den Merkmalen des Anspruchs 14 gelöst. Die weiteren abhängigen Ansprüche zeigen vorteilhafte Weiterbildung auf.

Erfindungsgemäß wird ein Verfahren zur Herstellung von thermisch stabilisierten schmelzgesponnenen Acryl-Fasern bereitgestellt, bei dem eine durch Schmelzspinnen hergestellte Faser oder ein Faserprecursor mit einem Gemisch enthaltend ein Lösungsmittel für PAN, insbesondere ausgewählt aus der Gruppe bestehend aus Dimethylsulfoxid, Dimethylformamid, Dimethylacetamid, N-Methylpyrrolidon, Ethylencarbonat, Propylencarbonat, wässrige Natriumrhodanid-Lösungen und Mischungen hiervon, und eine wässrige alkalische Lösung prästabilisiert wird.

Überraschenderweise wurde festgestellt, dass eine durch Schmelzspinnen hergestellte Faser durch Behandlung mit einer derartigen Lösung in einen unschmelzbaren Zustand überführt werden kann.

Dabei ist es bevorzugt, dass das Gemisch von 0,1 bis 60 Vol.-% des PAN-Lösungsmittels und von 40 bis 99,9 Vol.-% der wässrigen alkalischen Lösung enthält.

Die Prästabilisierung wird vorzugsweise in einem Modifizierungsbad enthaltend das Gemisch bei einer Temperatur von 20 bis 80°C, bevorzugt von 40 bis 65 °C, innerhalb einer Verweilzeit von 5 s bis 2 min, bevorzugt von 10 s bis 60 s, durchgeführt.

Vorzugsweise enthält die wässrige alkalische Lösung von 3 bis 15 mol/l mindestens eines Alkali- oder Erdalkalihydroxids, bevorzugt eines Alkalihydroxids, besonders bevorzugt Kaliumhydroxid oder Natriumhydroxid.

Die Anteile an PAN-Lösungsmittel und wässriger alkalischer Lösung im Gemisch werden vorzugsweise in Abhängigkeit vom Titer der entsprechenden Fasereingestellt.

An die Prästabilisierung schließt sich vorzugsweise eine oxidative Stabilisierung an. Die oxidative Stabilisierung wird dabei vorzugsweise bei Temperaturen von 200 bis 350°C in einer Sauerstoff- oder lufthaltigen Atmosphäre durchgeführt.

Erfindungsgemäß sind die Fasern bevorzugt Carbonfasern, wobei die Faserprecursoren aus einem Copolymer von Polyacrylnitril bestehen oder dieses im wesentlichen enthalten.

Dabei ist bevorzugt, dass der Faserprecursor durch ein Verfahren herstellbar ist, bei dem
i. eine Copolymerisation von 95 bis 80 mol-% Acrylnitril mit mindestens einem Comonomer ausgewählt aus
   a) 5 bis 20 mol-% mindestens eines Alkoxyalkylacrylats der allgemeinen Formel I, 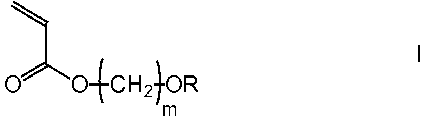 mit
      R = CₙH₂ₙ₊₁ und n = 1-8 und m = 1-8, insbesondere n=1-4 und m=1-4
   b) 0 bis 10 mol-% mindestens eines Alkylacrylats der allgemeinen Formel II mit 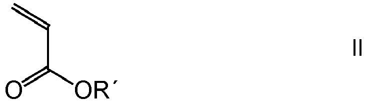 R = CₙH₂ₙ₊₁ und n = 1-18,
   c) 0 bis 10 mol-% mindestens eines Vinylester der allgemeinen Formel III mit 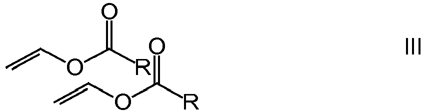 R = CₙH₂ₙ₊₁ und n = 1-18,
      in Gegenwart mindestens eines Initiators durchgeführt wird und
ii. das Copolymer mit einem Extruder mit mindestens einer für das Verspinnen geeigneten Düse am Extruderausgang zu Mono- oder Multi-Filamenten versponnen wird.

Das Copolymer weist vorzugsweise eine mit steigender Temperatur bis 240 °C, insbesondere bis 260 °C gleichbleibende oder sinkende Schmelzeviskosität auf.

Es ist weiter bevorzugt, dass 8 bis 12 mol-% des Comonomers in a) und/oder 1 bis 5 mol-% des Comonomers in b) und/oder 1 bis 5 mol-% des Comonomers in c) vorliegen.

Die Copolymerisation kann dabei vorzugsweise durch Fällungspolymerisation, eine Emulsionspolymerisation und/oder eine Polymerisation in einem Lösungsmittel erfolgen.

Das Lösungsmittel ist vorzugsweise ausgewählt aus der Gruppe bestehend aus Dimethylsulfoxid, Dimethylformamid, Dimethylacetamid, N-Methylpyrrolidon, Ethylencarbonat, Propylencarbonat, wässrige Natriumrhodanid-Lösung und Mischungen hiervon.

Erfindungsgemäß werden ebenso Fasern bereitgestellt, die nach dem zuvor beschriebenen Verfahren herstellbar sind. Hierbei handelt es sich insbesondere um Carbonfasern.

Anhand der nachfolgenden Beispiele und Figuren soll der erfindungsgemäße Gegenstand näher erläutert werden, ohne diesen auf die hier gezeigten spezifischen Ausführungsformen einschränken zu wollen.
Fig. 1 zeigt anhand eines schematischen Diagramms die Temperaturabhängigkeit des Speichermoduls von klassischen nichtschmelzbaren Acrylfasern und schmelzbaren Acryl-Precursoren vor der erfindungsgemäßen Behandlung.
Fig. 2 zeigt anhand eines Diagramms die Temperaturabhängigkeit des Speichermoduls einer unbehandelten Faser
Fig. 3 zeigt ein IR-Spektrum einer unbehandelten Faser
Fig. 4 zeigt anhand eines Diagramms die Temperaturabhängigkeit des Speichermoduls einer erfindungsgemäß behandelten Faser
Fig. 5 zeigt ein IR-Spektrum einer erfindungsgemäß behandelten Faser
Fig. 6 zeigt ein Foto eines unbehandelten (oben) und eines erfindungsgemäß behandelten (unten) Multifilamentes aus 42 Fasern, die beide einer oxidativen Stabilisierung bei 230°C unterworfen wurden. Das Schmelzen des unbehandelten Filamentes ist deutlich zu erkennen, das behandelte Filament schmilzt und verklebt nicht.

Die Wirkung der Behandlung wird mit folgenden Untersuchungen beschrieben:

### 1. Verkleben der Fasern:

Ca. 500mg Faserkurzschnitt werden zwischen Aluminiumfolie platziert und unter Belastung durch ein Gewicht von ca. 100g bei verschiedenen Temperaturen je 10min im Trockenschrank inkubiert. Es wird aufgezeichnet, ab welcher Temperatur es zu einem Verkleben der Aluminiumfolie durch die Fasern kommt. Diese Temperatur entspricht einer Erweichungs- bzw. Schmelztemperatur.

### 2. Schmelztischmikroskopie

Unter dem Schmelztischmikroskop wird das thermische Verhalten der Fasern beobachtet. Es wird aufgezeichnet, ob ein Schmelzen der Fasern zu beobachten ist.

### 3. Löslichkeit der Fasern:

Ca. 500mg Faserkurzschnitt werden in 10ml DMSO gelagert und notiert, nach welcher Zeit sich die Fasern auflösen. Mit dieser Testmethode werden Vernetzungen detektiert.

### 4. Dynamisch-mechanische Analyse (DMA):

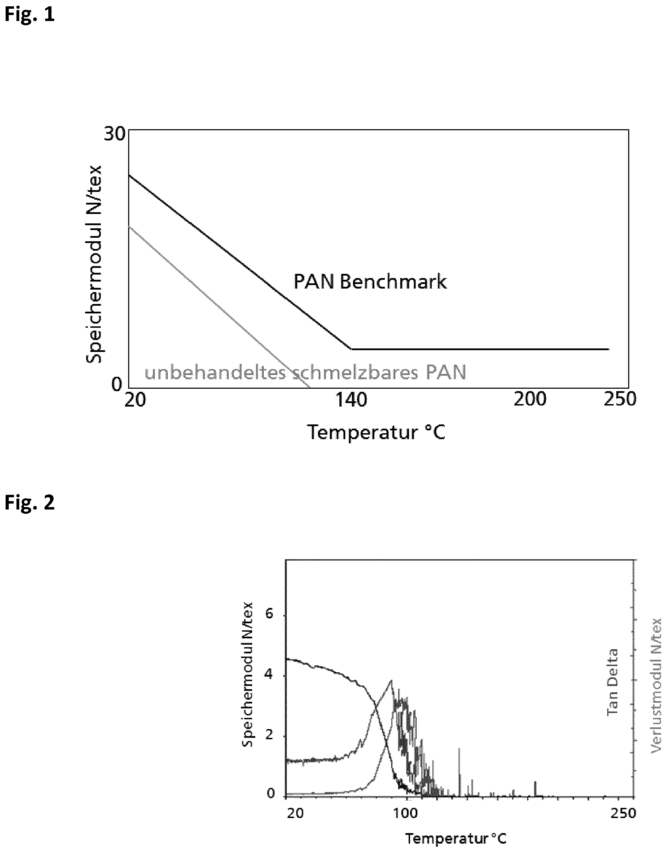

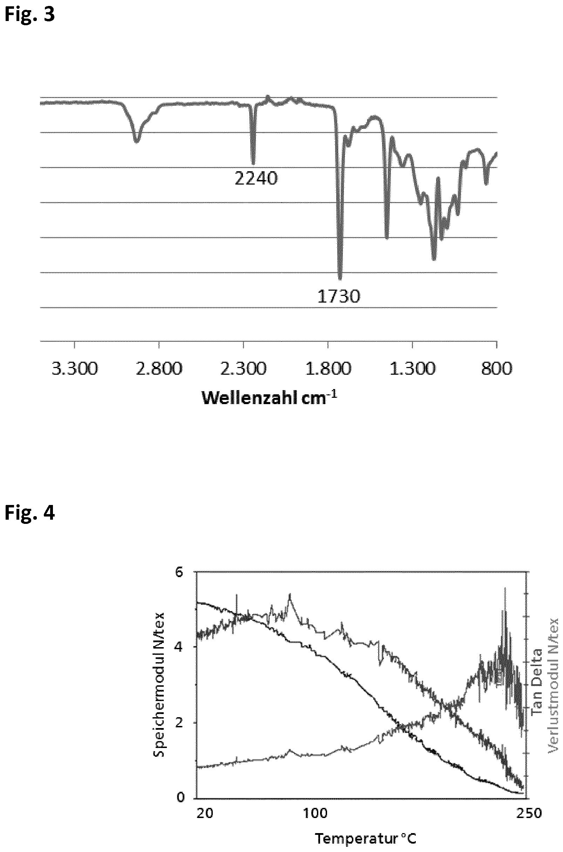

Der Speichermodul einer Faser von 10cm Länge wird in Abhängigkeit von der Temperatur bestimmt. Den prinzipiellen Verlauf der Kurven beschreiben die Figuren 2 und 4. Nicht modifiziertes PAN (nicht schmelzbar) zeigt einen Verlust des Speichermoduls mit der Temperatur bis etwa 140°C, danach bleibt ein konstanter Rest-Speichermodul erhalten, der die mechanische Stabilität der Faser sichert. Schmelzbares PAN, das nicht behandelt wurde, zeigt einen Verlust des Speichermoduls bis etwa 80°C, bei dieser Temperatur ist der Modul auf 0 abgesunken. Oberhalb von 80°C ist die Faser so weich, dass sie mechanisch nicht mehr belastbar ist und reißt (siehe Fig. 1).

### Beispiele:

### Vergleichsbeispiel

### Unbehandelte schmelzgesponnene Faser

Es wurde eine unbehandelte schmelzgesponnene Faser aus einem PAN-Copolymer mit 10% Methoxyethylacrylat und einer Molmasse von 15.000g/mol, Einzelfasertiter 0,82tex untersucht.

Dabei zeigte sich beim Verklebungstest, dass die Fasern ab 80°C verkleben. Auf dem Schmelztischmikroskop war ein vollständiges Schmelzen bei 185°C zu beobachten. Beim Löslichkeitstest waren die Fasern innerhalb 2min vollständig gelöst. Bei der DMA sinkt der Modul bis 100°C auf 0 ab(s. Fig. 2).

Aus dem IR-Spektrum (Fig. 3) ist eine Estergruppierung bei 1730cm⁻¹ deutlich zu erkennen, ebenso wie eine Nitrilgruppe bei 2240cm⁻¹. Weitere charakteristische Banden liegen nicht vor.

### Beispiel

### Erfindungsgemäß behandelte schmelzgesponnene Faser

Es wurde eine erfindungsgemäß behandelte schmelzgesponnene Faser aus einem Copolymer mit 10% Methoxyethylacrylat und einer Molmasse von 15.000g/mol, Einzelfasertiter 0,82tex untersucht. Hierfür wurde die im Vergleichsbeispiel beschriebene Faser für 60s bei 70°C in ein Modifizierungsbad der Zusammensetzung 50% DMSO und 50% 4,5M wässrige KOH gegeben. Die Faser verfärbt sich rotbraun. Anschließend wird neutral gewaschen und bei 50°C im Vakuum getrocknet.

Es zeigte sich beim Verklebungstest, dass die Fasern bis zu einer Temperatur von 230°C nicht verkleben. Auf dem Schmelztischmikroskop war bis 250°C kein Schmelzen der Fasern zu beobachten, lediglich die Farbe der Fasern änderte sich von rötlich über rotbraun bis zu schwarz. Das Ergebnis des Löslichkeitstests ist, dass die Fasern nach 24h vollständig erhalten sind. Bei der DMA sinkt der Modul bis 250°C ab, hat aber auch bei dieser Temperatur noch einen Wert größer 0 (s. Fig. 4).

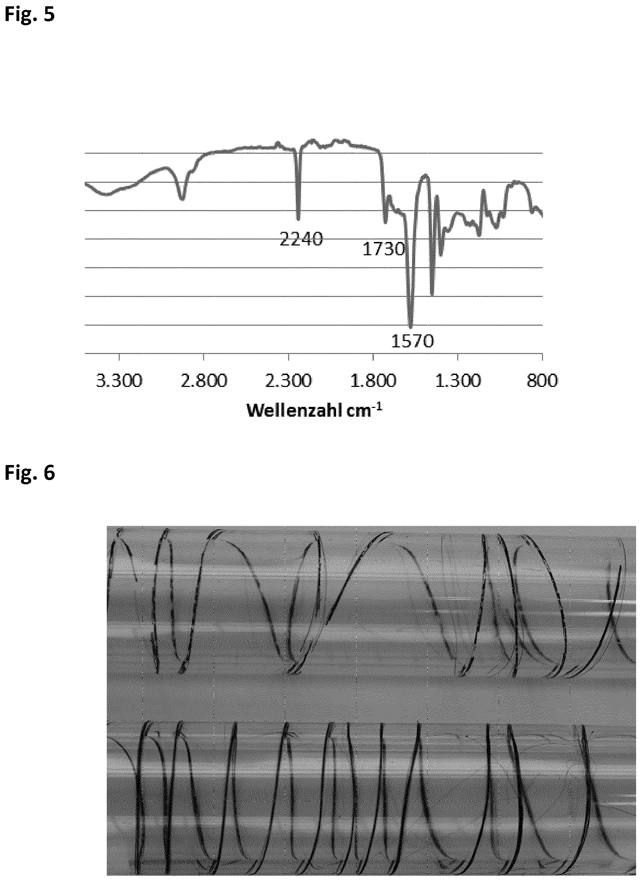

Aus dem IR-Spektrum (Fig.5) ergibt sich im Vergleich mit dem IR-Spektrum in Fig. 3, dass die Intensität der Bande der Estergruppierung bei 1730cm⁻¹ stark abgenommen hat, während die Intensität der Bande der Nitrilgruppe bei 2240cm⁻¹ konstant ist. Weiterhin tritt in Fig. 5 eine der Bildung der PAN-Leiterstruktur zuzurechnende Bande bei 1570cm⁻¹ auf.

## Patentansprüche

1. Verfahren zur thermischen Stabilisierung von schmelzgesponnen Acryl-Fasern, bei dem eine durch Schmelzspinnen hergestellte Acryl-Faser oder ein Faserprecursor mit einem Gemisch enthaltend ein Lösungsmittel für Polyacrylnitril und eine wässrige alkalische Lösung prästabilisiert wird.

2. Verfahren nach Anspruch 1,
**dadurch gekennzeichnet, dass** das Gemisch von 0,1 bis 60 Vol.-% des Lösungsmittels und von 40 bis 99,9 Vol.-% der wässrigen alkalischen Lösung enthält.

3. Verfahren nach einem der vorhergehenden Ansprüche,
**dadurch gekennzeichnet, dass** das Lösungsmittel ausgewählt ist aus der Gruppe bestehend aus Dimethylsulfoxid, Dimethylformamid, Dimethylacetamid, N-Methylpyrrolidon, Ethylencarbonat, Propylencarbonat, wässrige Natriumrhodanid-Lösungen und Mischungen hiervon.

4. Verfahren nach einem der vorhergehenden Ansprüche,
**dadurch gekennzeichnet, dass** die Prästabilisierung in einem Modifizierungsbad enthaltend das Gemisch bei einer Temperatur von 20 bis 80 °C, bevorzugt von 40 bis 65 °C innerhalb einer Verweilzeit von 5 s bis 2 min, bevorzugt von 10 s bis 60 s erfolgt.

5. Verfahren nach einem der vorhergehenden Ansprüche,
**dadurch gekennzeichnet, dass** die wässrige alkalische Lösung von 3 bis 15 mol/l mindestens eines Erdalkali- oder Alkalisalzes, bevorzugt eines Alkalihydroxids, besonders bevorzugt Kaliumhydroxid oder Natriumhydroxid, enthält.

6. Verfahren nach einem der vorhergehenden Ansprüche,
**dadurch gekennzeichnet, dass** die Anteile im Gemisch an Lösungsmittel und wässriger alkalischer Lösung in Abhängigkeit vom Titer eingestellt werden.

7. Verfahren nach einem der vorhergehenden Ansprüche,
**dadurch gekennzeichnet, dass** sich an die Prästabilisierung eine oxidative Stabilisierung und eine Carbonisierung unter Inertgas, insbesondere Argon oder Stickstoff, bei Temperaturen von 800 bis 1700 °C zur Herstellung von Carbonfasern anschließt.

8. Verfahren nach einem der vorhergehenden Ansprüche,
**dadurch gekennzeichnet, dass** die oxidative Stabilisierung bei Temperaturen von 200 bis 350 °C in einer sauerstoff- oder lufthaltigen Atmosphäre erfolgt.

9. Verfahren nach einem der vorhergehenden Ansprüchen,
**dadurch gekennzeichnet, dass** der Faserprecursor durch ein Verfahren herstellbar ist, bei dem
i. eine Copolymerisation von 95 bis 80 mol-% Acrylnitril mit mindestens einem Comonomer ausgewählt aus
a) 5 bis 20 mol-% mindestens eines Alkoxyalkylacrylats der allgemeinen Formel I, mit 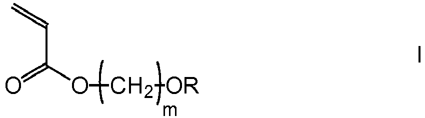 R = CₙH₂ₙ₊₁ und n = 1-8 und m = 1-8, insbesondere n=1-4 und m=1-4
b) 0 bis 10 mol-% mindestens eines Alkylacrylats der allgemeinen Formel II 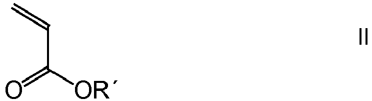 mit
R = CₙH₂ₙ₊₁ und n = 1-18,
c) 0 bis 10 mol-% mindestens eines Vinylester der allgemeinen Formel III mit 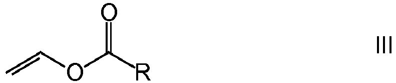 R = CₙH₂ₙ₊₁ und n = 1-18,
in Gegenwart mindestens eines Initiators durchgeführt wird und
ii. das Copolymer mit einem Extruder mit mindestens einer für das Verspinnen geeigneten Düse am Extruderausgang zu Mono- oder Multi-Filamenten versponnen wird.

10. Verfahren nach Anspruch 9,
**dadurch gekennzeichnet, dass** das Copolymer eine mit steigender Temperatur bis 240 °C, insbesondere bis 260 °C konstante oder sinkende Schmelzeviskosität aufweist.

11. Verfahren nach einem der Ansprüche 9 oder 10,
**dadurch gekennzeichnet, dass** 8 bis 12 mol-% des Comonomers in a) und/oder 1 bis 5 mol-% des Comonomers in b) und/oder 1 bis 5 mol-% des Comonomers in c) vorliegen.

12. Verfahren nach einem der Ansprüche 9 bis 11,
**dadurch gekennzeichnet, dass** die Copolymerisation durch eine Fällungspolymerisation, eine Emulsionspolymerisation und/oder eine Polymerisation in einem Lösungsmittel erfolgt.

13. Verfahren nach dem vorhergehenden Anspruch,
**dadurch gekennzeichnet, dass** das Lösungsmittel ausgewählt ist aus der Gruppe bestehend aus Dimethylsulfoxid, Dimethylformamid, Dimethylacetamid, N-Methylpyrrolidon, Ethylencarbonat, Propylencarbonat, wässrige Natriumrhodanid-Lösung und Mischungen hiervon.

14. Schmelzgesponnene Faser, die nach dem Verfahren nach einem der vorhergehenden Ansprüche thermisch stabilisiert wurde.

15. Faser nach Anspruch 14, die nach dem Verfahren nach Anspruch 7 zu einer Carbonfaser weiterverarbeitet wurde.

## Claims

1. Method for the thermal stabilization of melt-spun acrylic fibres, wherein acrylic fibre produced by melt spinning or a fibre precursor is prestabilized with a mixture comprising a solvent for polyacrylonitrile and an aqueous alkaline solution.

2. Method according to Claim 1, **characterized in that** the mixture comprises from 0.1 to 60 vol% of the solvent and from 40 to 99.9 vol% of the aqueous alkaline solution.

3. Method according to either of the preceding claims,
**characterized in that** the solvent is selected from the group consisting of dimethyl sulfoxide, dimethylformamide, dimethylacetamide, N-methylpyrrolidone, ethylene carbonate, propylene carbonate, aqueous sodium rhodanide solutions and mixtures thereof.

4. Method according to any of the preceding claims,
**characterized in that** the prestabilization takes place in a modifying bath comprising the mixture at a temperature of 20 to 80°C, preferably of 40 to 65°C, within a residence time of 5 s to 2 min, preferably of 10 s to 60 s.

5. Method according to any of the preceding claims,
**characterized in that** the aqueous alkaline solution comprises from 3 to 15 mol/l of at least one alkaline earth metal salt or alkali metal salt, preferably of an alkali metal hydroxide, more preferably potassium hydroxide or sodium hydroxide.

6. Method according to any of the preceding claims,
**characterized in that** the proportions of solvent and aqueous alkaline solution in the mixture are set depending on the titre.

7. Method according to any of the preceding claims,
**characterized in that** the prestabilization is followed by an oxidative stabilization and a carbonization under inert gas, more particularly argon or nitrogen, at temperatures of 800 to 1700°C for producing carbon fibres.

8. Method according to any of the preceding claims,
**characterized in that** the oxidative stabilization takes place at temperatures of 200 to 350°C in an oxygen-containing or air-containing atmosphere.

9. Method according to any of the preceding claims,
**characterized in that** the fibre precursor is producible by a process wherein
i. 95 to 80 mol% of acrylonitrile are copolymerized with at least one comonomer selected from
a) 5 to 20 mol% of at least one alkoxyalkyl acrylate of the general formula I, 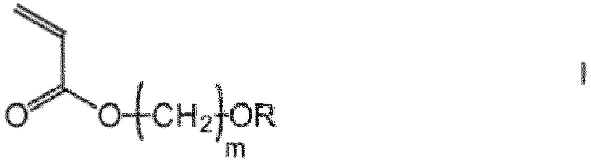 where
R = CₙH₂ₙ₊₁ and n = 1-8 and m = 1-8, more particularly n = 1-4 and m = 1-4
b) 0 to 10 mol% of at least one alkyl acrylate of the general formula II 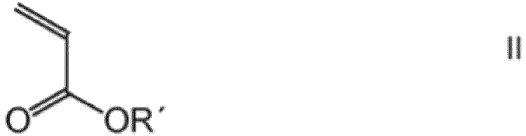 where
R = CₙH₂ₙ₊₁ and n = 1-18,
c) 0 to 10 mol% of at least one vinyl ester of the general formula III 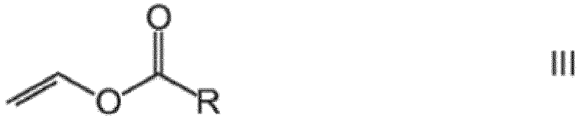
where
R = CₙH₂ₙ₊₁ and n = 1-18, in the presence of at least one initiator, and
ii. the copolymer is spun to monofilaments or multifilaments with an extruder having at least one nozzle suitable for spinning at the extruder outlet.

10. Method according to Claim 9,
**characterized in that** the copolymer has a melt viscosity which is constant or decreasing with increasing temperature up to 240°C, more particularly up to 260°C.

11. Method according to either of Claims 9 and 10,
**characterized in that** there are 8 to 12 mol% of the comonomer in a) and/or 1 to 5 mol% of the comonomer in b) and/or 1 to 5 mol% of the comonomer in c).

12. Method according to any of Claims 9 to 11,
**characterized in that** the copolymerization takes place by a precipitation polymerization, an emulsion polymerization and/or a polymerization in a solvent.

13. Method according to the preceding claim,
**characterized in that** the solvent is selected from the group consisting of dimethyl sulfoxide, dimethylformamide, dimethylacetamide, N-methylpyrrolidone, ethylene carbonate, propylene carbonate, aqueous sodium rhodanide solution and mixtures thereof.

14. Melt-spun fibre which has been thermally stabilized by the method according to one of the preceding claims.

15. Fibre according to Claim 14, which has been further processed to a carbon fibre by the method according to Claim 7.

## Revendications

1. Procédé de stabilisation thermique de fibres acryliques filées par fusion, dans lequel on préstabilise une fibre acrylique fabriquée par filage par fusion ou un précurseur de fibres, à l'aide d'un mélange contenant un solvant du polyacrylonitrile et une solution alcaline aqueuse.

2. Procédé selon la revendication 1, **caractérisé en ce que** le mélange contient de 0,1 à 60 % en volume du solvant et de 40 à 99,9 % en volume de la solution alcaline aqueuse.

3. Procédé selon l'une des revendications précédentes, **caractérisé en ce que** le solvant est choisi dans le groupe consistant en le diméthylsulfoxyde, le diméthylformamide, le diméthylacétamide, la N-méthylpyrrolidone, le carbonate d'éthylène, le carbonate de propylène, les solutions aqueuses de rhodanide de sodium et les mélanges de ceux-ci.

4. Procédé selon l'une des revendications précédentes, **caractérisé en ce que** la préstabilisation est réalisée dans un bain de modification contenant le mélange à une température de 20 à 80 °C, de préférence de 40 à 65 °C, pendant un temps de séjour de 5 s à 2 min, de préférence de 10 s à 60 s.

5. Procédé selon l'une des revendications précédentes, **caractérisé en ce que** la solution alcaline aqueuse contient 3 à 15 mol/l d'au moins un sel d'un métal alcalino-terreux ou d'un métal alcalin, de préférence d'un hydroxyde d'un métal alcalin, d'une manière particulièrement préférée d'hydroxyde de potassium ou d'hydroxyde de sodium.

6. Procédé selon l'une des revendications précédentes, **caractérisé en ce que** les proportions du solvant et de la solution alcaline aqueuse dans le mélange sont ajustées en fonction du titre.

7. Procédé selon l'une des revendications précédentes, **caractérisé en ce que** la préstabilisation est suivie d'une stabilisation oxydative et d'une carbonisation sous gaz inerte, en particulier sous argon ou azote, à des températures de 800 à 1700 °C, pour la fabrication de fibres de carbone.

8. Procédé selon l'une des revendications précédentes, **caractérisé en ce que** la stabilisation oxydative est réalisée à des températures de 200 à 350 °C dans une atmosphère contenant de l'oxygène ou de l'air.

9. Procédé selon l'une des revendications précédentes, **caractérisé en ce que** le précurseur de fibres peut être fabriqué par un procédé dans lequel
i. on met en oeuvre en présence d'au moins un amorceur une copolymérisation de 95 à 80 % en moles d'acrylonitrile avec au moins un comonomère choisi parmi
a) 5 à 20 % en moles d'au moins un acrylate d'alcoxyalkyle de formule générale I 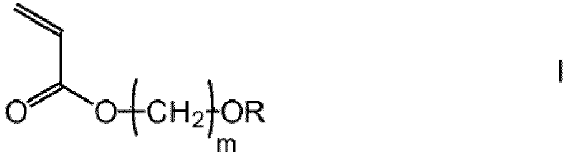 dans laquelle
R = CₙH₂ₙ₊₁ et n = 1 à 8 et m = 1 à 8, en particulier n = 1 à4 etm = 1 à 4,
b) 0 à 10 % en moles d'au moins un acrylate d'alkyle de formule générale II 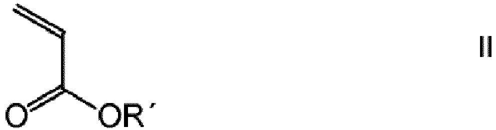 dans laquelle
R = CₙH₂ₙ₊₁ et n = 1 à 18,
c) 0 à 10 % en moles d'au moins un ester vinylique de formule générale III 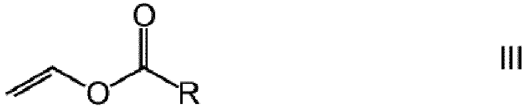 dans laquelle
R = CₙH₂ₙ₊₁ et n = 1 à 18, et
ii. on file le copolymère à l'aide d'une extrudeuse, à l'aide d'au moins une buse convenant au filage, en sortie de l'extrudeuse pour obtenir des mono- ou des multi-filaments.

10. Procédé selon la revendication 9, **caractérisé en ce que** le copolymère présente, pour une température croissant jusqu'à 240 °C, en particulier jusqu'à 260 °C, une viscosité à l'état fondu constante ou décroissante.

11. Procédé selon l'une des revendications 9 ou 10, **caractérisé par** la présence de 8 à 12 % en moles du comonomère a) et/ou de 1 à 5 % en moles du comonomère b) et/ou de 1 à 5 % en moles du comonomère c).

12. Procédé selon l'une des revendications 9 à 11, **caractérisé en ce que** la copolymérisation est réalisée par une polymérisation par précipitation, une polymérisation en émulsion et/ou une polymérisation dans un solvant.

13. Procédé selon l'une des revendications précédentes, **caractérisé en ce que** le solvant est choisi dans le groupe consistant en le diméthylsulfoxyde, le diméthylformamide, le diméthylacétamide, la N-méthylpyrrolidone, le carbonate d'éthylène, le carbonate de propylène, les solutions aqueuses de rhodanide de sodium et les mélanges de ceux-ci.

14. Fibre filée par fusion, qui a été stabilisée par voie thermique par le procédé selon l'une des revendications précédentes.

15. Fibre selon la revendication 14, qui a été soumise à un post-traitement par le procédé selon la revendication 7 pour donner une fibre de carbone.
